# EUROPEAN PATENT SPECIFICATION

(11) **EP 3 163 856 B1**
(45) Date of publication and mention of the grant of the patent: **03.05.2023**
(21) Application number: 16185324.7
(22) Date of filing: 23.08.2016
(51) Int. Cl.: H04M 3/436

(54) **CALL PROCESSING METHOD AND DEVICE**
ANRUFVERARBEITUNGSVERFAHREN UND VORRICHTUNG
PROCÉDÉ ET DISPOSITIF DE TRAITEMENT D'APPEL

(30) Priority: 29.10.2015 CN 201510724716
(43) Date of publication of application: 03.05.2017
(73) Proprietor: Xiaomi Inc., Beijing 100085 (CN)
(72) Inventor: WANG, Guangjian, Beijing 100085 (CN); PAN, Long, Beijing 100085 (CN); ZOU, Yixing, Beijing 100085 (CN)
(74) Representative: Cabinet Beau de Loménie

(56) References cited:
- WO-A1-2008/031871
- WO-A1-2009/092061
- US-A1- 2010 197 275
- US-A1- 2011 280 160

## Description

### TECHNICAL FIELD

The present invention relates to the communication technology field, and more particularly to a call processing method and device.

### BACKGROUND

The phone call is one of the most common and most instant communication ways. As a development of communication technology, phones have become a necessity in a human life, and thus many people prompt products to the user or cheat money from the user via phones (i.e. for example via voice phishing), which brings unnecessary troubles to the user's daily life. Thus, there is a need to intercept this kind of calls, thus avoiding the unfavorable impact on the user's daily life. In particular, products prompted by people can correspond to product advertised during telemarketing calls.

In the prior art, the call processing method may be intercepting a call from an unidentified number. That is, when a call number does not belong to the contact list, the call number is intercepted. However, when the user orders take-out food or places other purchase orders via the phone number of the terminal, a call request from an unidentified number may be received in a short time, and if the above call processing method is used to process this call, the call from a product delivery man may be missed, which reduces the communication efficiency, and cannot satisfy the normal communication demand of the user.

Document WO 2008/031871 A1 discloses a method and a system for communicating messages between a sender and a recipient, e.g. e-mails. An evidence collection is generated and contains identifiers of entities from whom a recipient have requested information, e.g. by visiting an internet page owned by the entity in question. If the entity in question subsequently sends an e-mail to the recipient, the evidence collection is searched, and when a match has been found between an identifier in the evidence collection and an identifier of the sender of the e-mail message, the e-mail is delivered to the intended recipient.

### SUMMARY

In order to solve the problems in the prior art, the present invention provides a call processing method and device.

According to a first aspect of embodiments, the invention relates to a call processing method according to Claim 1.

According to a second aspect of embodiment, the invention relates to a call processing device according to Claim 5.

In one particular embodiment, the steps of the above call processing method are determined by computer program instructions.

Consequently, according to a fourth aspect, the invention also relates to a computer program for executing the steps of a call processing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

The technical solutions provided by embodiments of the present invention may have the following beneficial effects.

In the present invention, by determining whether the usage information of the terminal includes user transaction information on a specified application or a specified call log associated with the unidentified call, whether the unidentified call is desired or needed by the user of the terminal may be determined, such that the control on intercepting or not the unidentified call may be realized, thus avoiding missed calls efficiently, further improving the communication efficiency, and satisfying the normal communication demand of the user.

It should be understood that the above general description and following detail description are exemplary and explanatory, and shall not be construed to limit the present invention, which is defined by the subject-matter of the independent claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention
Fig. 1 is a flow chart of a call processing method according to an exemplary embodiment of the present invention.
Fig. 2 is a flow chart of a call processing method according to an exemplary embodiment of the present invention.
Fig. 3 is a block diagram of a call processing device according to an exemplary embodiment of the present invention.
Fig. 4 is a block diagram of a call processing device 400 according to an exemplary embodiment of the present invention.

### DETAILED DESCRIPTION

In order to make objectives, technical solutions and advantages of the present invention clearer, implementations of the present invention will be described in detail below with reference to drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

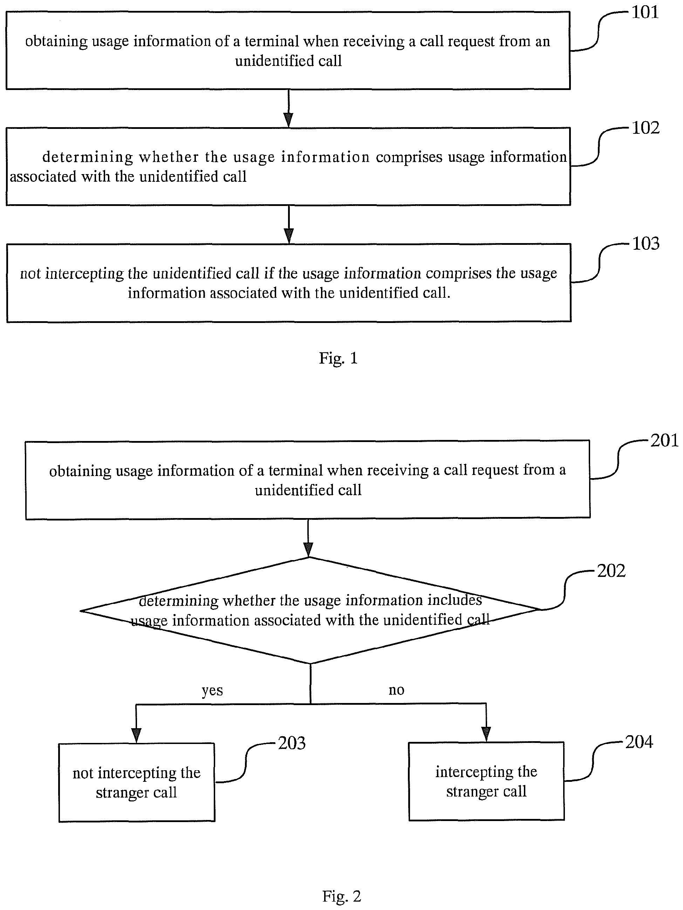

Fig. 1 is a flow chart of a call processing method according to an exemplary embodiment of the present invention. As shown in Fig. 1, the call processing method is performed by a terminal, and comprises steps as follows.

In step 101, usage information of the terminal is obtained when a call request is received from an unidentified call.

In step 102, it is determined whether the usage information includes usage information associated with the unidentified call.

In step 103, the unidentified call is not intercepted if the usage information includes usage information associated with the unidentified call.

With the method provided by embodiments of the present invention, by determining whether the usage information of the terminal includes user transaction information on a specified client application or a specified call log associated with the unidentified call, whether the unidentified call is desired or needed by the user of the terminal may be determined, such that the control of intercepting or not the unidentified call may be realized, thus avoiding missed calls efficiently, further improving the communication efficiency, and satisfying the normal communication demand of the user.

In an exemplary embodiment, the step of determining whether the usage information comprises usage information associated with the unidentified call comprises:
determining whether client application usage information of the terminal comprises user transaction information on a specified client application, in which the user transaction information is newly added within a first preset period; or
determining whether call history information of the terminal comprises a specified call log associated with the unidentified call, the specified call log comprising a log of outgoing calls, a log of calls having a number of calls greater than a preset number or a log of calls having a call duration greater than a preset duration.

In an exemplary embodiment, the step of not intercepting the unidentified call if the usage information comprises the usage information associated with the unidentified call comprises:
not intercepting the unidentified call within a second preset period

In an exemplary embodiment, before the step of obtaining the usage information of the terminal, the method further comprises:
detecting whether a first intercept function is in an active state;
detecting whether a second intercept function is in an active state when the first intercept function is in the active state; and
triggering obtaining the usage information of the terminal when the second intercept function is in the active state.

In an exemplary embodiment, the step of not intercepting the unidentified call comprises:
detecting whether a first intercept function is in an active state, and displaying a first reminder message on a current interface of the terminal if the first intercept function is in the active state, the first reminder message reminding of whether to deactivate the first intercept function; or
detecting whether a first intercept function is in an active state, displaying a second reminder message on the current interface of the terminal if the first intercept function is in the active state, the second reminder message reminding of whether to activate a second intercept function, and controlling the first intercept function to not intercept the unidentified call after activating the second intercept function.

The above exemplary technical solutions may be combined in any way to form alternative embodiments of the present invention.

Fig. 2 is a flow chart of a call processing method according to an exemplary embodiment of the present invention. The executive body of this embodiment is the terminal, and referring to Fig. 2, this embodiment comprises following steps.

In step 201, usage information of the terminal is obtained when a call request is received from an unidentified call.

In order to avoid unnecessary interruptions, call interception has become a common function of a terminal. At present, call interception includes unidentified number interception, interception of all number and blacklist interception, etc. However, when the user allows the interception of unidentified number or the interception of all number, he/she may miss necessary calls, for example, calls from delivery men. In order to avoid missing necessary calls, the present invention provides a method which further determines whether to intercept the call according to the usage information of the terminal, based on the above interception rules.

The unidentified call refers to a call from a phone number not stored in the contact list. Whether the current call is an unidentified call may be determined in the following way. The phone number of the current call is obtained, and then it is determined whether the phone number is stored in the contact list. If the phone number is not stored in the contact list, it is determined that the current call is an unidentified call, and if the phone number is stored in the contact list, it is determined that the current call is not an unidentified call.

The usage information of the terminal at least includes client application usage information of the terminal and call history information of the terminal. The client application usage information of the terminal includes usage information of any client application installed in the terminal. The call history information of the terminal at least includes a log of calls, a log of outgoing calls, call duration and a number corresponding to each phone number.

It should be noted that before the step of obtaining the usage information of the terminal, the call processing method provided by the present invention further comprises: detecting whether a first intercept function is in an active state; detecting whether a second intercept function is in an active state when the first intercept function is in the active state; and triggering obtaining the usage information of the terminal when the second intercept function is in the active state.

The first intercept function may be an unidentified number intercept function, or may be an all number intercept function, or any other call intercept function which may lead to missing necessary calls. The second intercept function may be a call intercept function for optimizing the first intercept function according to the usage information of the terminal and based on realizing the first intercept function, and may aim at avoiding missing necessary calls.

In step 202, it is determined whether the usage information includes usage information associated with the unidentified call. If the usage information includes the usage information associated with the unidentified call, step 203 is executed, and if the usage information does not include the usage information associated with the unidentified call, step 204 is executed.

When the call request from the unidentified call is received, the phone number of the unidentified call is obtained, and according to the phone number and the definition of the usage information of the terminal in step 201, it may be determined whether the usage information of the terminal includes the usage information associated with the unidentified call in the following two ways.

In the first way, it is determined whether the client application usage information of the terminal includes user transaction information on a specified client application, in which the user transaction information is newly added within a first preset period.

When the user conducts transaction operations in the specified client application, a call request from an unidentified call may be received in a first preset period after the transaction. If the unidentified number interception or the all number interception in the terminal is in the active state, the call may be missed, which may not satisfy the communication demand of the user. The specified client application refers to commercial platforms, such as Taxi Application, Take-out Application and Ticket Buying Application.

For example, when the user places one order via the Take-out Application installed in the terminal, the delivery man may send a call request to the terminal within two hours for notifying the user of the take-out food's delivery situation.

It should be noted that the first preset period may be determined in the following way. The transaction history information of the specified client application is obtained (the transaction history information at least including the delivery time information), and the value corresponding to the longest delivery time is determined as the first preset period. The above method for determining the first preset period may avoid missing necessary unidentified call to a maximum extent. Certainly, the first preset period may be determined in other ways, which shall not be limited herein.

In the second way, it is determined whether the call history information of the terminal comprises a specified call log associated with the unidentified call, in which the specified call log includes a log of outgoing calls, a log of calls having a number of calls greater than a preset number or a log of calls having a call duration greater than a preset duration.

The specified call log associated with the unidentified call is obtained from the call history information of the terminal according to the phone number of the unidentified call. When the specified call log satisfies any one of the following conditions, it is determined that the usage information includes the usage information associated with the unidentified call.

The first condition is that the log associated with the unidentified call includes a log of outgoing calls, that is, the terminal has called the phone number of the unidentified call, but the user has not stored the phone number into the contact list.

The second condition is that in the log associated with the unidentified call, the number of calls between the terminal and the unidentified call is greater than the preset number. The preset number may be determined as follows. A number of calls from each unidentified call is obtained from the call history information, and then an average number of calls is obtained and determined as the preset number. The preset number may be determined as any fixed value, which shall not be limited herein.

The third condition is that in the log associated with the unidentified call, the call duration of a call between the terminal and the s unidentified call is greater than the preset duration. The preset duration may be determined as follows. The call duration of each unidentified call is obtained from the call history information, and then an average call duration is calculated and determined as the preset duration. The preset duration may also be any fixed value, which shall not be limited herein.

For the above three conditions, it is determined whether the usage information includes the usage information associated with the unidentified call according to the specified call log associated with the unidentified call. When the calling log includes the phone number of the unidentified call, it may be determined that the user of the terminal has voluntarily contacted the user corresponding to the unidentified call, and it may be further determined that the unidentified call is a call desired or needed by the user of the terminal. Accordingly, in the called log, when a call duration between the user of the terminal and the user corresponding to the unidentified call is greater than the preset duration, or a number of calls between the user of the terminal and the user corresponding to the unidentified call is greater than the preset number, it may also be determined that the unidentified call is desired or needed by the user.

In another embodiment of the present invention, the unidentified number which the terminal calls, the phone number corresponding to the unidentified call having a number of calls greater than the preset number, and the phone number corresponding to the unidentified call having a call duration greater than the preset duration are stored in a specified database. When a call request from an unidentified call is received, it is determined whether the specified database stores the phone number of the unidentified call. If the specified database stores the phone number of the unidentified call, step 203 is executed, and if the specified database does not store the phone number of the unidentified call, step 204 is executed.

It should be noted that the unidentified phone number stored in the specified database may be updated according to a preset cycle, so as to save storage space of the specified database and reduce determining time. The preset cycle may be three months or half a year, or may be determined according to the frequency of receiving unidentified calls, or may be determined in other ways, which shall not be limited herein.

It can be determined whether the usage information includes the usage information associated with the unidentified call in any one or both of above two ways. For example, when the user frequently performs virtual transaction via the specified client application installed in the terminal, only the first way may be adopted for the step of determining. When the user of the terminal frequently receives the call requests from unidentified calls, only the second way may be adopted for the step of determining. Thus, the call processing efficiency may be enhanced. However, when both of the above two ways are adopted for the step of determining, it is possible to efficiently avoid missing necessary unidentified calls.

In step 203, the unidentified call is not intercepted if the usage information includes the usage information associated with the unidentified call.

If the determining result of step 202 is that the usage information includes the usage information associated with the unidentified call, a reminder message for the unidentified call is displayed on the terminal interface, for notifying the user of real-time processing. In order to block interruptions of the user from unnecessary unidentified calls efficiently based on ensuring that necessary unidentified calls are not missed, the call processing method provided by the present invention may include: not intercepting the unidentified call within a second preset period if the usage information includes the usage information associated with the unidentified call.

For example, when the user performs virtual transaction via the Take-out Application installed in the terminal, the occurrence time of the virtual transaction is obtained, and if the second preset period is two hours, then a timer is started from the occurrence time, and the call request from the unidentified call is not intercepted when the timer is on.

The second preset period may be determined according to the type of the specified client application, or may be determined according to the delivery distance or the delivery time of the history order goods, which shall not be limited herein.

In another embodiment of the present invention, when an opening or closing operation is detected on any specified application, the usage information of the specified client application is obtained. When user transaction information on the specified client application is detected, the following two methods may be adopted to display the reminder message on the terminal, so as to avoid missing necessary unidentified calls due to the fact that the second intercept function of the terminal is not in the active state.

The first method is that it is detected whether the first intercept function is in the active state, and a first reminder message is displayed on a current interface of the terminal if the first intercept function is in the active state, in which the first reminder message reminds of whether to deactivate the first intercept function.

The second method is that it is detected whether the first intercept function is in the active state, a second reminder message is displayed on the current interface of the terminal if the first intercept function is in the active state, in which the second reminder message reminds of whether to activate the second intercept function, and after the second intercept function is activated, the first intercept function is controlled not to intercept the unidentified call.

With the above two methods, the problem of missing necessary unidentified calls caused by forgetting to activate the second intercept function after activating the first intercept function may be avoided efficiently. Certainly, the user may be reminded of in other ways, which shall not be limited herein.

In step 204, the unidentified call is intercepted if the usage information does not include the usage information associated with the unidentified call.

The unidentified call may be intercepted in the following two ways.

In the first way, the terminal intercepts and reminds. That is, the unidentified call is hung up automatically, and a reminder message of the unidentified call is displayed on the terminal interface. The reminder message for the unidentified call may include the call time and the phone number, etc. Alternatively, the unidentified call may be put through automatically and a specified voice message is played. The call may be hung up after the voice message is played once, or the voice message may be played in a continuous loop until the user corresponding to the unidentified call hangs up the phone. The specified voice message may be customized by the user, or may be inherent in the system, which shall not be limited herein.

In the second way, the terminal only intercepts but does not remind. After the unidentified call is hung up automatically or put through and then hung up automatically, the reminder message of the unidentified call is not displayed on the terminal interface, but the intercepted phone number and the interception time may be stored in the interception history database, for checking by the user.

In another embodiment of the present invention, in order to further avoid missing necessary unidentified calls, the phone number of the unidentified call and the intercept number may be stored, such that the unidentified call may not be intercepted when the call request from the unidentified call is received again.

With the method provided by the present invention, by determining whether the usage information of the terminal includes user transaction information on a specified client application or a specified call log associated with the unidentified call, it may be determined whether the unidentified call is desired or needed by the user of the terminal, such that the control on intercepting or not the unidentified call may be realized, thus avoiding missed calls efficiently, further improving the communication efficiency, and satisfying the normal communication demand of the user. Further, when the usage information includes the usage information associated with the unidentified call, the duration of controlling interception is limited by the second preset duration, such that the call processing method may reduce interruptions of the user efficiently based on avoiding missed calls.

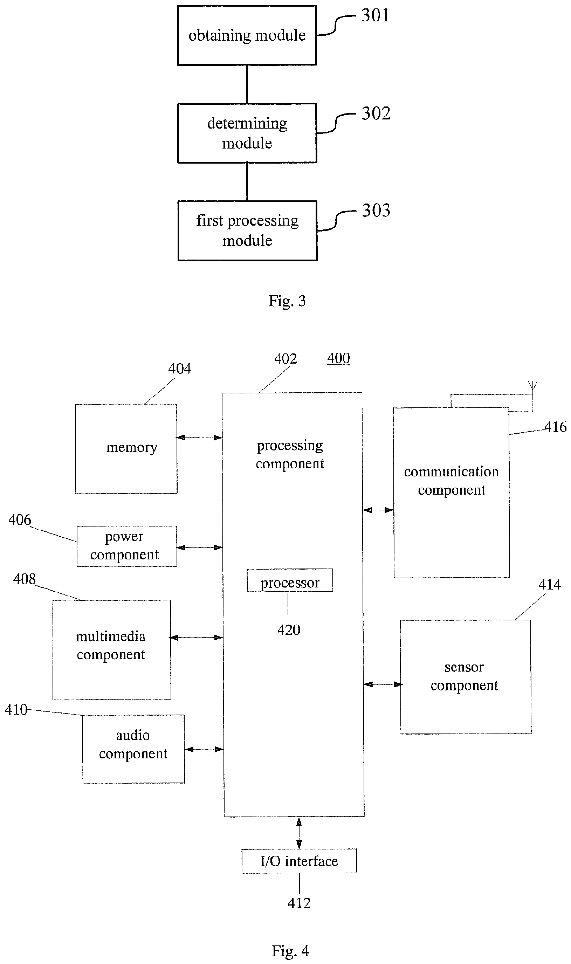

Fig. 3 is a block diagram of a call processing device, for example a terminal, according to an exemplary embodiment of the present invention. Referring to Fig. 3, the device comprises an obtaining module 301, a determining module 302 and a first processing module 303.

The obtaining module 301 is configured to obtain usage information of a terminal when a call request is received from a unidentified call.

The determining module 302 is configured to determine whether the usage information obtained by the obtaining module 301 includes usage information associated with the unidentified call.

The first processing module 303 is configured to not intercept the unidentified call if the determining module 302 determines that the usage information includes the usage information associated with the unidentified call.

In a first possible implementation of the present invention, the determining module 302 is configured to:
determine whether client application usage information of the terminal obtained by the obtaining module 301 includes user transaction information on a specified client application, in which the user transaction information is newly added within a first preset period; or
determine whether call history information of the terminal obtained by the obtaining module 301 includes a specified call log associated with the unidentified call, in which the specified call log comprises a log of outgoing calls, a log of calls having a number of calls greater than a preset number or a log of calls having a call duration greater than a preset duration.

In a second possible implementation of the present invention, the first processing module 301 is configured to not intercept the unidentified call within a second preset period if the determining module 302 determines that the usage information comprises the usage information associated with the unidentified call.

In a third possible implementation of the present invention, the device further comprises:
a detecting module, configured to detect whether a first intercept function is in an active state, and to detect whether a second intercept function is in an active state if the first intercept function is in the active state; and
a second processing module, configured to trigger to obtain the usage information of the terminal, if the detecting module detects that the second intercept function is in the active state.

In a fourth possible implementation of the present invention, the first processing module 303 is configured to:
detect whether a first intercept function is in an active state, and display a first reminder message on a current interface of the terminal if the first intercept function is in the active state, the first reminder message reminding of whether to deactivate the first intercept function; or
detect whether a first intercept function is in an active state, display a second reminder message on the current interface of the terminal if the first intercept function is in the active state, the second reminder message reminding of whether to activate a second intercept function, and control the first intercept function to not intercept the unidentified call after activating the second intercept function.

With respect to the devices in the above embodiments, the specific operation modes of individual modules therein have been described in detail in the embodiments regarding the call processing methods.

Fig. 4 is a block diagram of a call processing device 400 according to exemplary embodiments of the present invention. For example, the device 400 may be a mobile phone, a computer, a digital broadcasting terminal, a messaging device, a game console, a tablet device, a fitness equipment, a medical device, a Personal Digital Assistant PDA, etc.

Referring to Fig. 4, the device 400 may include the following one or more components: a processing component 402, a memory 404, a power component 406, a multimedia component 408, an audio component 410, an Input/Output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 1220 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 408 includes a front camera and/or a rear camera. The front camera and/or the rear camera may receive external multimedia data while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface for the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400 and relative positioning of components (e.g. the display and the keypad of the device 400). The sensor component 414 may also detect a change in position of the device 400 or of a component in the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate wired or wireless communication between the device 400 and other devices. The device 400 can access a wireless network based on a communication standard, such as WIFI, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 404 including instructions. The above instructions are executable by the processor 420 in the device 400, for performing the above-described methods. For example, the non-transitory computer-readable storage medium may be a ROM, a RAM, a CD-ROM, a magnetic tape, a floppy disc, an optical data storage device, and the like.

In exemplary embodiments, there is also provided a non-transitory computer readable storage medium, when instructions in the storage medium are executed by a processor in a mobile terminal, the mobile terminal may execute the above call processing method.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

## Claims

1. A call processing method, comprising:
obtaining (101) usage information of a terminal when receiving a call request from an unidentified call, wherein the unidentified call refers to a call from a phone number not stored in a contact list of the terminal;
determining (102) whether the usage information comprises usage information associated with the unidentified call; and
not intercepting (103) the unidentified call if the usage information comprises the usage information associated with the unidentified call, wherein intercepting a call consists in hanging up the call automatically or putting through the call and hanging up the call automatically, the method being **characterized in that** it comprises, before said step (101) of obtaining said usage information:
detecting whether a first intercept function is in an active state, wherein the first intercept function comprises unidentified number interception, interception of all number or blacklist interception;
detecting whether a second intercept function is in an active state when the first intercept function is in the active state; and
triggering the step (101) of obtaining the usage information of the terminal when the second intercept function is in the active state, wherein the second intercept function is a call intercept function for optimizing the first intercept function according to the usage information of the terminal, wherein the second intercept function comprises said step (101) of obtaining the usage information of the terminal, said step (102) of determining whether the usage information comprises usage information associated with the unidentified call, and said step (103) of not intercepting the unidentified call.

2. The method according to claim 1, wherein the step (102) of determining whether the usage information comprises usage information associated with the unidentified call comprises:
determining whether client application usage information of the terminal comprises user transaction information on a specified client application, in which the user transaction information is newly added within a first preset period; or
determining whether call history information of the terminal comprises a specified call log associated with the unidentified call, in which the specified call log comprises a log of outgoing calls, a log of calls having a number of calls greater than a preset number or a log of calls having a call duration greater than a preset duration.

3. The method according to anyone of claims 1 or 2, wherein the step (103) of not intercepting the unidentified call if the usage information comprises the usage information associated with the unidentified call comprises:
not intercepting the unidentified call within a second preset period.

4. The method according to anyone of claims 1 or 2, wherein the step (103) of not intercepting the unidentified call comprises:
detecting whether a first intercept function is in an active state, and displaying a first reminder message on a current interface of the terminal if the first intercept function is in the active state, the first reminder message reminding of whether to deactivate the first intercept function; or
detecting whether a first intercept function is in an active state, displaying a second reminder message on the current interface of the terminal if the first intercept function is in the active state, the second reminder message reminding of whether to activate a second intercept function, and controlling the first intercept function to not intercept the unidentified call after activating the second intercept function.

5. A call processing device, comprising:
an obtaining module (301), configured to obtain usage information of a terminal when a call request is received from a unidentified call, wherein the unidentified call refers to a call from a phone number not stored in a contact list of the terminal;
a determining module (302), configured to determine whether the usage information comprises usage information associated with the unidentified call; and
a first processing module (303), configured to not intercept the unidentified call if the usage information comprises the usage information associated with the unidentified call, wherein intercepting a call consists in hanging up the call automatically or putting through the call and hanging up the call automatically, being **characterized by**
a detecting module, configured to detect whether a first intercept function is in an active state, and to detect whether a second intercept function is in an active state if the first intercept function is in the active state, wherein the first intercept function comprises unidentified number interception, interception of all number or blacklist interception; and
a second processing module, configured to trigger obtaining the usage information of the terminal, if the detecting module detects that the second intercept function is in the active state, wherein
the second intercept function is a call intercept function for optimizing the first intercept function according to the usage information of the terminal, wherein the second intercept function comprises obtaining the usage information of the terminal determining whether the usage information comprises usage information associated with the unidentified call, and not intercepting the unidentified call.

6. The device according to claim 5, wherein the determining module (302) is configured to:
determine whether client application usage information of the terminal obtained by the obtaining module comprises user transaction information on a specified client application, in which the user transaction information is newly added within a first preset period; or
determine whether call history information of the terminal obtained by the obtaining module comprises a specified call log associated with the unidentified call, in which the specified call log comprises a log of outgoing calls, a log of calls having a number of calls greater than a preset number or a log of calls having a call duration greater than a preset duration.

7. The device according to anyone of claims 5 or 6, wherein the first processing module (303) is configured to:
not intercept the unidentified call within a second preset period, if the determining module determines that the usage information comprises the usage information associated with the unidentified call.

8. The device according to anyone of claims 5 or 6, wherein the first processing module (303) is configured to:
detect whether a first intercept function is in an active state, and display a first reminder message on a current interface of the terminal if the first intercept function is in the active state, the first reminder message reminding of whether to close the first intercept function; or
detect whether a first intercept function is in an active state, display a second reminder message on the current interface of the terminal if the first intercept function is in the active state, the second reminder message reminding of whether to activate a second intercept function, and control the first intercept function to not intercept the unidentified call after activating the second intercept function.

9. A computer program including instructions for executing the steps of a call processing method according to any one of claims 1 to 4 5- when said program is executed by a computer.

10. A recording medium readable by a computer and having recorded thereon a computer program including instructions for executing the steps of a call processing method according to any one of claims 1 to 4.

## Patentansprüche

1. Anrufverarbeitungsverfahren, das Folgendes umfasst:
Erhalten (101) von Nutzungsinformationen eines Endgeräts beim Empfangen einer Anrufanforderung von einem unidentifizierten Anruf, wobei der unidentifizierte Anruf einen Anruf von einer Telefonnummer bezeichnet, die nicht in einer Kontaktliste des Endgeräts gespeichert ist;
Bestimmen (102), ob die Nutzungsinformationen Nutzungsinformationen umfassen, die mit dem unidentifizierten Anruf verknüpft sind; und
Nichtunterbrechen (103) des unidentifizierten Anrufs, wenn die Nutzungsinformationen die Nutzungsinformationen umfassen, die mit dem unidentifizierten Anruf verknüpft sind, wobei das Unterbrechen eines Anrufs im automatischen Auflegen des Anrufs oder automatischen Durchstellen und Auflegen des Anrufs besteht, wobei das Verfahren **dadurch gekennzeichnet ist, dass** es vor dem Schritt (101) des Erhaltens der Nutzungsinformationen Folgendes umfasst:
Feststellen, ob eine erste Unterbrechungsfunktion sich in einem aktiven Zustand befindet, wobei die erste Unterbrechungsfunktion Unterbrechung unidentifizierter Nummern, Unterbrechung aller Nummern oder Sperrlistenunterbrechung umfasst;
Feststellen, ob eine zweite Unterbrechungsfunktion sich in einem aktiven Zustand befindet, wenn die erste Unterbrechungsfunktion sich im aktiven Zustand befindet; und
Auslösen des Schritts (101) des Erhaltens der Nutzungsinformationen des Endgeräts, wenn die zweite Unterbrechungsfunktion sich im aktiven Zustand befindet, wobei die zweite Unterbrechungsfunktion eine Anrufunterbrechungsfunktion zum Optimieren der ersten Unterbrechungsfunktion gemäß den Nutzungsinformationen des Endgeräts ist, wobei die zweite Unterbrechungsfunktion den Schritt (101) des Erhaltens der Nutzungsinformationen des Endgeräts, den Schritt (102) des Bestimmens, ob die Nutzungsinformationen Nutzungsinformationen umfassen, die mit dem unidentifizierten Anruf verknüpft sind, und den Schritt (103) des Nichtunterbrechens des unidentifizierten Anrufs umfasst.

2. Verfahren nach Anspruch 1, wobei der Schritt (102) des Bestimmens, ob die Nutzungsinformationen Nutzungsinformationen umfassen, die mit dem unidentifizierten Anruf verknüpft sind, Folgendes umfasst:
Bestimmen, ob Client-Anwendungsnutzungsinformationen des Endgeräts Benutzertransaktionsinformationen über eine angegebene Client-Anwendung umfassen, in denen die Benutzertransaktionsinformationen innerhalb eines ersten voreingestellten Zeitraums neu hinzugefügt werden; oder
Bestimmen, ob Anrufverlaufsinformationen des Endgeräts ein angegebenes Anrufprotokoll umfassen, das mit dem unidentifizierten Anruf verknüpft ist, wobei das angegebene Anrufprotokoll ein Protokoll von ausgehenden Anrufen, ein Protokoll von Anrufen mit einer Anzahl von Anrufen, die größer als eine voreingestellte Anzahl ist, oder ein Protokoll von Anrufen umfasst, die eine Anrufdauer aufweisen, die länger als eine voreingestellte Dauer ist.

3. Verfahren nach einem der Ansprüche 1 oder 2, wobei der Schritt (103) des Nichtunterbrechens des unidentifizierten Anrufs, wenn die Nutzungsinformationen die Nutzungsinformationen umfassen, die mit dem unidentifizierten Anruf verknüpft sind, Folgendes umfasst:
Nichtunterbrechen des unidentifizierten Anrufs innerhalb eines zweiten voreingestellten Zeitraums.

4. Verfahren nach einem der Ansprüche 1 oder 2, wobei der Schritt (103) des Nichtunterbrechens des unidentifizierten Anrufs Folgendes umfasst:
Feststellen, ob eine erste Unterbrechungsfunktion sich in einem aktiven Zustand befindet, und Anzeigen einer ersten Erinnerungsnachricht auf einer gegenwärtigen Benutzeroberfläche des Endgeräts, wenn die erste Unterbrechungsfunktion sich im aktiven Zustand befindet, wobei die erste Erinnerungsnachricht daran erinnert, ob die erste Unterbrechungsfunktion zu deaktivieren ist; oder
Feststellen, ob eine erste Unterbrechungsfunktion sich in einem aktiven Zustand befindet, Anzeigen einer zweiten Erinnerungsnachricht auf der gegenwärtigen Benutzeroberfläche des Endgeräts, wenn die erste Unterbrechungsfunktion sich im aktiven Zustand befindet, wobei die zweite Erinnerungsnachricht daran erinnert, ob eine zweite Unterbrechungsfunktion zu aktivieren ist, und Steuern der ersten Unterbrechungsfunktion, um den unidentifizierten Anruf nach dem Aktivieren der zweiten Unterbrechungsfunktion nicht zu unterbrechen.

5. Anrufverarbeitungsvorrichtung, die Folgendes umfasst:
ein Erhaltemodul (301), das dazu ausgestaltet ist, Nutzungsinformationen eines Endgeräts zu erhalten, wenn eine Anrufanforderung von einem unidentifizierten Anruf empfangen wird, wobei der unidentifizierte Anruf einen Anruf von einer Telefonnummer bezeichnet, die nicht in einer Kontaktliste des Endgeräts gespeichert ist;
ein Bestimmungsmodul (302), das dazu ausgestaltet ist, zu bestimmen, ob die Nutzungsinformationen Nutzungsinformationen umfassen, die mit dem unidentifizierten Anruf verknüpft sind; und
ein erstes Verarbeitungsmodul (303), das dazu ausgestaltet ist, den unidentifizierten Anruf nicht zu unterbrechen, wenn die Nutzungsinformationen die Nutzungsinformationen umfassen, die mit dem unidentifizierten Anruf verknüpft sind, wobei das Unterbrechen eines Anrufs im automatischen Auflegen des Anrufs oder automatischen Durchstellen und Auflegen des Anrufs besteht, **gekennzeichnet durch**
ein Feststellungsmodul, das dazu ausgestaltet ist, festzustellen, ob eine erste Unterbrechungsfunktion sich in einem aktiven Zustand befindet, und festzustellen, ob eine zweite Unterbrechungsfunktion sich in einem aktiven Zustand befindet, wenn die erste Unterbrechungsfunktion sich im aktiven Zustand befindet, wobei die erste Unterbrechungsfunktion Unterbrechung unidentifizierter Nummern, Unterbrechung aller Nummern oder Sperrlistenunterbrechung umfasst; und
ein zweites Verarbeitungsmodul, das dazu ausgestaltet ist, das Erhalten der Nutzungsinformationen des Endgeräts auszulösen, wenn das Feststellungsmodul feststellt, dass die zweite Unterbrechungsfunktion sich im aktiven Zustand befindet, wobei die zweite Unterbrechungsfunktion eine Anrufunterbrechungsfunktion zum Optimieren der ersten Unterbrechungsfunktion gemäß den Nutzungsinformationen des Endgeräts ist, wobei die zweite Unterbrechungsfunktion das Erhalten der Nutzungsinformationen des Endgeräts, das Bestimmen, ob die Nutzungsinformationen Nutzungsinformationen umfassen, die mit dem unidentifizierten Anruf verknüpft sind, und das Nichtunterbrechen des unidentifizierten Anrufs umfasst.

6. Vorrichtung nach Anspruch 5, wobei das Bestimmungsmodul (302) für Folgendes ausgestaltet ist:
Bestimmen, ob Client-Anwendungsnutzungsinformationen des Endgeräts, die durch das Erhaltemodul erhalten werden, Benutzertransaktionsinformationen über eine angegebene Client-Anwendung umfassen, in denen die Benutzertransaktionsinformationen innerhalb eines ersten voreingestellten Zeitraums neu hinzugefügt werden; oder
Bestimmen, ob Anrufverlaufsinformationen des Endgeräts, die durch das Erhaltemodul erhalten werden, ein angegebenes Anrufprotokoll umfassen, das mit dem unidentifizierten Anruf verknüpft ist, wobei das angegebene Anrufprotokoll ein Protokoll von ausgehenden Anrufen, ein Protokoll von Anrufen mit einer Anzahl von Anrufen, die größer als eine voreingestellte Anzahl ist, oder ein Protokoll von Anrufen umfasst, die eine Anrufdauer aufweisen, die länger als eine voreingestellte Dauer ist.

7. Vorrichtung nach einem der Ansprüche 5 oder 6, wobei das erste Verarbeitungsmodul (303) für Folgendes ausgestaltet ist:
Nichtunterbrechen des unidentifizierten Anrufs innerhalb eines zweiten voreingestellten Zeitraums, wenn das Bestimmungsmodul bestimmt, dass die Nutzungsinformationen die Nutzungsinformationen umfassen, die mit dem unidentifizierten Anruf verknüpft sind.

8. Vorrichtung nach einem der Ansprüche 5 oder 6, wobei das erste Verarbeitungsmodul (303) für Folgendes ausgestaltet ist:
Feststellen, ob eine erste Unterbrechungsfunktion sich in einem aktiven Zustand befindet, und Anzeigen einer ersten Erinnerungsnachricht auf einer gegenwärtigen Benutzeroberfläche des Endgeräts, wenn die erste Unterbrechungsfunktion sich im aktiven Zustand befindet, wobei die erste Erinnerungsnachricht daran erinnert, ob die erste Unterbrechungsfunktion zu schließen ist; oder
Feststellen, ob eine erste Unterbrechungsfunktion sich in einem aktiven Zustand befindet, Anzeigen einer zweiten Erinnerungsnachricht auf der gegenwärtigen Benutzeroberfläche des Endgeräts, wenn die erste Unterbrechungsfunktion sich im aktiven Zustand befindet, wobei die zweite Erinnerungsnachricht daran erinnert, ob eine zweite Unterbrechungsfunktion zu aktivieren ist, und Steuern der ersten Unterbrechungsfunktion, um den unidentifizierten Anruf nach dem Aktivieren der zweiten Unterbrechungsfunktion nicht zu unterbrechen.

9. Computerprogramm, das Anweisungen zum Ausführen der Schritte eines Anrufverarbeitungsverfahrens nach einem der Ansprüche 1 bis 4 umfasst, wenn das Programm durch einen Computer ausgeführt wird.

10. Aufzeichnungsmedium, das durch einen Computer lesbar ist und darauf aufgezeichnet ein Computerprogramm aufweist, das Anweisungen zum Ausführen der Schritte eines Anrufverarbeitungsverfahrens nach einem der Ansprüche 1 bis 4 umfasst.

## Revendications

1. Procédé de traitement d'appel, comprenant :
le fait d'obtenir (101) des informations d'utilisation d'un terminal lors de la réception d'une demande d'appel d'un appel non identifié, dans lequel l'appel non identifié fait référence à un appel provenant d'un numéro de téléphone non stocké dans une liste de contacts du terminal ;
le fait de déterminer (102) si les informations d'utilisation comprennent des informations d'utilisation associées à l'appel non identifié ; et
le fait de ne pas intercepter (103) l'appel non identifié si les informations d'utilisation comprennent les informations d'utilisation associées à l'appel non identifié, dans lequel l'interception d'un appel consiste à raccrocher l'appel automatiquement ou à passer l'appel et à raccrocher l'appel automatiquement, le procédé étant **caractérisé en ce qu'**il comprend, avant ladite étape (101) d'obtention desdites informations d'utilisation :
le fait de détecter si une première fonction d'interception est dans un état actif, dans lequel la première fonction d'interception comprend l'interception de numéros non identifiés, l'interception de tous les numéros ou l'interception de listes noires ;
le fait de détecter si une deuxième fonction d'interception est dans un état actif lorsque la première fonction d'interception est dans l'état actif ; et
le fait de déclencher l'étape (101) d'obtention des informations d'utilisation du terminal lorsque la deuxième fonction d'interception est dans l'état actif, dans lequel
la deuxième fonction d'interception est une fonction d'interception d'appel pour optimiser la première fonction d'interception selon les informations d'utilisation du terminal, dans lequel la deuxième fonction d'interception comprend ladite étape (101) d'obtention des informations d'utilisation du terminal, ladite étape (102) de détermination du fait que les informations d'utilisation comprennent ou non des informations d'utilisation associées à l'appel non identifié, et ladite étape (103) de non interception de l'appel non identifié.

2. Procédé selon la revendication 1, dans lequel l'étape (102) de détermination du fait que les informations d'utilisation comprennent ou non des informations d'utilisation associées à l'appel non identifié comprend :
le fait de déterminer si des informations d'utilisation d'application client du terminal comprennent des informations de transaction utilisateur sur une application client spécifiée dans laquelle les informations de transaction utilisateur sont nouvellement ajoutées au cours d'une première période prédéfinie ; ou
le fait de déterminer si des informations d'historique d'appels du terminal comprennent un journal d'appels spécifié associé à l'appel non identifié, dans lequel le journal d'appels spécifié comprend un journal d'appels sortants, un journal d'appels ayant un nombre d'appels supérieur à un nombre prédéfini ou un journal d'appels ayant une durée d'appel supérieure à une durée prédéfinie.

3. Procédé selon l'une quelconque des revendications 1 ou 2, dans lequel l'étape (103) de non interception de l'appel non identifié si les informations d'utilisation comprennent les informations d'utilisation associées à l'appel non identifié comprend :
le fait de ne pas intercepter l'appel non identifié au cours d'une deuxième période prédéfinie.

4. Procédé selon l'une quelconque des revendications 1 ou 2, dans lequel l'étape (103) de non interception de l'appel non identifié comprend :
le fait de détecter si une première fonction d'interception est dans un état actif, et d'afficher un premier message de rappel sur une interface courante du terminal si la première fonction d'interception est dans l'état actif, le premier message de rappel rappelant s'il faut désactiver la première fonction d'interception ; ou
le fait de détecter si une première fonction d'interception est dans un état actif, d'afficher un deuxième message de rappel sur l'interface courante du terminal si la première fonction d'interception est dans l'état actif, le deuxième message de rappel rappelant s'il faut activer une deuxième fonction d'interception, et de commander la première fonction d'interception pour ne pas intercepter l'appel non identifié après avoir activé la deuxième fonction d'interception.

5. Dispositif de traitement d'appel, comprenant :
un module d'obtention (301), configuré pour obtenir des informations d'utilisation d'un terminal lorsqu'une demande d'appel est reçue d'un appel non identifié, dans lequel l'appel non identifié fait référence à un appel provenant d'un numéro de téléphone non stocké dans une liste de contacts du terminal ;
un module de détermination (302), configuré pour déterminer si les informations d'utilisation comprennent des informations d'utilisation associées à l'appel non identifié ; et
un premier module de traitement (303), configuré pour ne pas intercepter l'appel non identifié si les informations d'utilisation comprennent les informations d'utilisation associées à l'appel non identifié, dans lequel l'interception d'un appel consiste à raccrocher l'appel automatiquement ou à passer l'appel et à raccrocher l'appel automatiquement, étant **caractérisé par**
un module de détection configuré pour détecter si une première fonction d'interception est dans un état actif, et pour détecter si une deuxième fonction d'interception est dans un état actif si la première fonction d'interception est dans l'état actif, dans lequel la première fonction d'interception comprend l'interception de numéros non identifiés, l'interception de tous les numéros ou l'interception de listes noires ; et
un deuxième module de traitement, configuré pour déclencher l'obtention des informations d'utilisation du terminal si le module de détection détecte que la deuxième fonction d'interception est dans l'état actif, dans lequel
la deuxième fonction d'interception est une fonction d'interception d'appel pour optimiser la première fonction d'interception selon les informations d'utilisation du terminal, dans lequel la deuxième fonction d'interception comprend le fait d'obtenir les informations d'utilisation du terminal déterminant si les informations d'utilisation comprennent des informations d'utilisation associées à l'appel non identifié, et le fait de ne pas intercepter l'appel non identifié.

6. Dispositif selon la revendication 5, dans lequel le module de détermination (302) est configuré pour :
déterminer si des informations d'utilisation d'application client du terminal obtenues par le module d'obtention comprennent des informations de transaction utilisateur sur une application client spécifiée dans laquelle les informations de transaction utilisateur sont nouvellement ajoutées au cours d'une première période prédéfinie ; ou
déterminer si des informations d'historique d'appels du terminal obtenues par le module d'obtention comprennent un journal d'appels spécifié associé à l'appel non identifié, dans lequel le journal d'appels spécifié comprend un journal d'appels sortants, un journal d'appels ayant un nombre d'appels supérieur à un nombre prédéfini ou un journal d'appels ayant une durée d'appel supérieure à une durée prédéfinie.

7. Dispositif selon l'une quelconque des revendications 5 ou 6, dans lequel le premier module de traitement (303) est configuré pour :
ne pas intercepter l'appel non identifié au cours d'une deuxième période prédéfinie, si le module de détermination détermine que les informations d'utilisation comprennent les informations d'utilisation associées à l'appel non identifié.

8. Dispositif selon l'une quelconque des revendications 5 ou 6, dans lequel le premier module de traitement (303) est configuré pour :
détecter si une première fonction d'interception est dans un état actif, et afficher un premier message de rappel sur une interface courante du terminal si la première fonction d'interception est dans l'état actif, le premier message de rappel rappelant s'il faut quitter la première fonction d'interception ; ou
détecter si une première fonction d'interception est dans un état actif, afficher un deuxième message de rappel sur l'interface courante du terminal si la première fonction d'interception est dans l'état actif, le deuxième message de rappel rappelant s'il faut activer une deuxième fonction d'interception, et commander la première fonction d'interception pour ne pas intercepter l'appel non identifié après avoir activé la deuxième fonction d'interception.

9. Programme informatique comportant des instructions pour exécuter les étapes d'un procédé de traitement d'appel selon l'une quelconque des revendications 1 à 4 lorsque ledit programme est exécuté par un ordinateur.

10. Support d'enregistrement lisible par un ordinateur et sur lequel est enregistré un programme informatique comportant des instructions pour exécuter les étapes d'un procédé de traitement d'appel selon l'une quelconque des revendications 1 à 4.
